# EUROPÄISCHE PATENTSCHRIFT

(11) **EP 3 728 407 B1**
(45) Veröffentlichungstag und Bekanntmachung des Hinweises auf die Patenterteilung: **24.03.2021**
(21) Anmeldenummer: 17818133.5
(22) Anmeldetag: 19.12.2017
(51) Int. Cl.: C08G 77/04, C08G 77/26

(54) **VERFAHREN ZUR HERSTELLUNG VON OXAMIDOESTER-GRUPPEN AUFWEISENDEN SILOXANEN**
METHOD FOR PRODUCING SILOXANES COMPRISING OXAMIDO ESTER GROUPS
PROCÉDÉ DE PRODUCTION DE SILOXANES PRÉSENTANT DES GROUPES OXAMIDOESTER

(43) Veröffentlichungstag der Anmeldung: 28.10.2020
(73) Patentinhaber: Wacker Chemie AG, 81737 München (DE)
(72) Erfinder: SCHÄFER, Oliver, 84489 Burghausen (DE)
(74) Vertreter: Budczinski, Angelika
(86) Internationale Anmeldenummer: PCT/EP2017/083535
(87) Internationale Veröffentlichungsnummer: WO 2019/120484

(56) Entgegenhaltungen:
- EP-A1- 0 568 147
- WO-A2-2011/090644
- US-A1- 2007 149 745

## Beschreibung

Die Erfindung betrifft ein Verfahren zur Herstellung von Oxamidoester-Gruppen aufweisenden Siloxanen.

Die chemische Gruppe 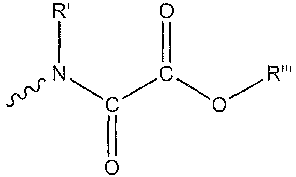 wird häufig als 2-Amino-2-oxoacetat- oder als Oxamid- bzw. als Oxamidoester-Gruppe bezeichnet, wobei im Folgenden der Begriff Oxamidoester als Bezeichnung für diese Gruppe verwendet werden soll. Oxamidester haben durch die Kombination der Halbester-Struktur mit einer Oxo-Gruppe den Vorteil reaktiver als Amide oder Carbamate zu sein, v.a. bei der Umsetzung mit Aminen oder Alkoholen. Sie sind im Vergleich zu Isocyanat-Strukturen jedoch deutlich stabiler - sie dimerisieren oder trimerisieren z.B. nicht und sind deutlich weniger reaktiv, was die Reaktionsführung mit diesen Gruppen deutlich einfacher gestaltet.

Oxamidoester-funktionelle Polysiloxane sind in vielen Anwendungsbereichen brauchbar v.a. jedoch zur Herstellung von Blockcopolymeren von thermoplastischen Siloxanen wie sie z.B. in EP-A 1 963 404 beschrieben werden. Grundsätzlich bekannt und beschrieben ist die Herstellung solcher Oxamidoester-funktioneller Siloxane in US-A 2007/0149745. Hierbei werden als Ausgangsprodukte Bisaminoalkyl-funktionelle Siloxane verwendet, die über verschiedene Methoden hergestellt werden können. Diese Bisaminoalkyl-funktionellen Siloxane werden bevorzugt mit im Überschuss vorhandenen Dialkyloxalaten zu gewünschten substituierten amino-oxo-acetat-funktionellen Siloxanen umgesetzt, vereinfacht im Nachfolgenden Oxamidoester-funktionelle Siloxane genannt. Der Überschuss an in der Reaktionsmischung vorhandenen Dialkyloxalaten muss dabei zur weiteren Umsetzung dieser Produkte in der Regel ebenfalls entfernt werden, was hier v.a. durch eine diskontinuierliche Vakuumdestillation geschieht. Nachteilig an dem beschriebenen Verfahren sind nun einige Dinge. So hängt der Funktionalisierungsgrad der Oxamidoester-funktionellen Siloxane in erster Linie vom Funktionalisierungsgrad der als Ausgangsstoff verwendeten Bisaminoalkyl-siloxane ab, die aber nur mit größerem Aufwand mit einer Funktionalität > 99% hergestellt werden können. Weiterhin ist es zur Vermeidung von Nebenreaktionen nötig, die zugesetzten Dialkyloxalate in relativ großen Überschüssen einzusetzten, was wiederum eine aufwändige und teure Entfernung dieser Dialkyloxalate nach sich zieht, da diese z.T giftig sind. Ein dritter wesentlicher Nachteil ist die Tatsache, dass kommerziell erhältliche Dialkyloxalate wie z.B. Diethyloxalat Verunreinigungen enthalten, die bei der Umsetzung mit Bisamino-funktionellen Siloxanen zu teilweise sehr stark gefärbten Produkten führen, die in einem weiteren Schritt aufwändig entfärbt werden müssen, wenn die weitere Verwendung optisch klare und farblose Produkte erfordert. Zur Herstellung von Oxamidoester-funktionellen Siloxanen verschiedener Kettenlänge ist dabei die Verfügbarkeit entsprechender Aminosiloxan-Vorstufen verpflichtend. Der wahrscheinlich größte Nachteil dieses Verfahrens ist jedoch, dass es damit nahezu unmöglich ist in einem technischen Verfahren Siloxane herzustellen, welche die Oxamidoester-Funktion in der Seitenkette trägt, weil die Reaktion zweier seitenständiger Amingruppen mit 1 Molekül Oxalsäurediethylester zu kettenverlängertem und damit zu teilvernetzten Produkten führt. Diese Reaktion kann nur durch unrealistisch hohe Überschüsse an Oxalsäureestern zurück gedrängt werden, deren Entfernung die Synthese dieser Verbindungen unwirtschaftlich machen würde. Daher sind bis heute Verbindungen, welche Oxalatgruppen in der Seitenkette tragen, nicht beschrieben worden.

Es bestand daher die Aufgabe, die Nachteile des Standes der Technik zu überwinden.

Gegenstand der Erfindung ist ein Verfahren zur Herstellung von Oxamidoester-Gruppen aufweisenden Siloxanen durch Umsetzung von (A) Silanen der allgemeinen Formel 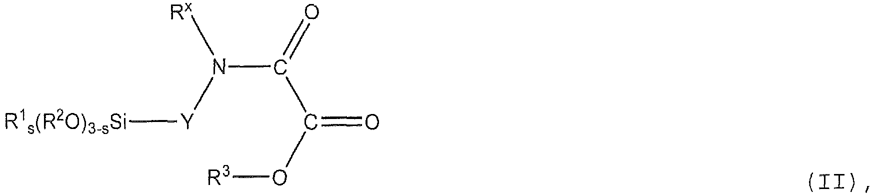 gegebenenfalls (B) Silanen der allgemeinen Formel

R⁴ₜ(R⁵O)₄₋ₜSi (III)

und (W) Wasser,
wobei
**R¹** unabhängig voneinander gleich oder verschieden sein kann und einwertige, gegebenenfalls substituierte, SiC-gebundene Kohlenwasserstoffreste bedeutet, welche durch Heteroatome unterbrochen sein können,
**R²** unabhängig voneinander gleich oder verschieden sein kann und Wasserstoffatom oder einwertige gegebenenfalls substituierte Kohlenwasserstoffreste bedeutet, welche durch Heteroatome unterbrochen sein können,
**R³** einwertige, gegebenenfalls substituierte Kohlenwasserstoffreste bedeutet, die durch Sauerstoffatome unterbrochen sein können,
**R^{x}** Wasserstoffatom oder gegebenenfalls substituierte Kohlenwasserstoffreste bedeutet,
**Y** zweiwertige, gegebenenfalls substituierte Kohlenwasserstoffreste darstellt, die durch Sauerstoffatome oder Stickstoffatome unterbrochen sein können,
**R⁴** unabhängig voneinander gleich oder verschieden sein kann und einwertige, gegebenenfalls substituierte, SiC-gebundene Kohlenwasserstoffreste bedeutet, welche durch Heteroatome unterbrochen sein können,
**R⁵** unabhängig voneinander gleich oder verschieden sein kann und Wasserstoffatom oder einwertige, gegebenenfalls substituierte Kohlenwasserstoffreste bedeutet, welche durch Heteroatome unterbrochen sein können,
**s** 0, 1 oder 2, bevorzugt 1 oder 2, ist und
**t** 0, 1, 2 oder 3, bevorzugt 2 oder 3, ist.

Beispiele für Kohlenwasserstoffreste R¹ sind Alkylreste wie der Methyl-, Ethyl-, n-Propyl-, iso-Propyl-, n-Butyl, iso-Butyl-, tert.-Butyl-, n-Pentyl-, iso-Pentyl-, neo-Pentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder
Aralkylreste wie der Benzylrest oder der α- und der β-Phenylethylrest.

Beispiele für substituierte Kohlenwasserstoffreste R¹ sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Hydroxyalkylreste, wie der Hydroxypropylrest; oder Epoxidreste wie der Glycidyloxypropylrest.

Vorzugsweise handelt es sich bei Rest R¹ um einwertige, gegebenenfalls mit Halogenatomen oder Hydroxygruppen substituierte, SiC-gebundene Kohlenwasserstoffreste mit 1 bis 20 Kohlenstoffatomen, die durch Sauerstoffatome unterbrochen sein können, bevorzugt um einwertige Kohlenwasserstoffreste mit 1 bis 6 Kohlenstoffatomen, besonders bevorzugt um einwertige aliphatische Kohlenwasserstoffreste mit 1 bis 6 Kohlenstoffatomen, insbesondere um den Methyl-, Ethyl- oder Propylrest, ganz besonders bevorzugt um den Methylrest.

Beispiele für Rest R² sind die für den Rest R¹ angegebenen Reste sowie über Kohlenstoffatom gebundene Polyalkylenglykolreste.

Bevorzugt handelt es sich bei Rest R² um Wasserstoffatom oder einwertige, gegebenenfalls substituierte Kohlenwasserstoffreste, die durch Sauerstoffatome unterbrochen sein können, besonders bevorzugt um einwertige Kohlenwasserstoffreste mit 1 bis 6 Kohlenstoffatomen, insbesondere um den Methyl-, Ethyl- oder Propylrest.

Beispiele für Rest R³ sind die für den Rest R¹ angegebenen Reste sowie über Kohlenstoffatom gebundene Polyalkylenglykolreste.

Bevorzugt handelt es sich bei Rest R³ um einwertige, gegebenenfalls substituierte Kohlenwasserstoffreste, die durch Sauerstoffatome unterbrochen sein können, besonders bevorzugt um einwertige Kohlenwasserstoffreste mit 1 bis 6 Kohlenstoffatomen, insbesondere um den Methyl-, Ethyl- oder Propylrest.

Beispiele für Rest R⁴ sind die für den Rest R¹ angegebenen Reste.

Vorzugsweise handelt es sich bei Rest R⁴ um einwertige, gegebenenfalls mit Halogenatomen oder Hydroxygruppen substituierte, SiC-gebundene Kohlenwasserstoffreste mit 1 bis 20 Kohlenstoffatomen, die durch Sauerstoffatome unterbrochen sein können, bevorzugt um einwertige Kohlenwasserstoffreste mit 1 bis 6 Kohlenstoffatomen, besonders bevorzugt um einwertige, aliphatische Kohlenwasserstoffreste mit 1 bis 6 Kohlenstoffatomen, insbesondere um den Methyl-, Ethyl- oder Propylrest, ganz besonders bevorzugt um den Methylrest.

Beispiele für Rest R⁵ sind die für den Rest R² angegebenen Reste.

Bevorzugt handelt es sich bei Rest R⁵ um Wasserstoffatom oder einwertige, gegebenenfalls substituierte Kohlenwasserstoffreste, die durch Sauerstoffatome unterbrochen sein können, besonders bevorzugt um Wasserstoffatom oder einwertige Kohlenwasserstoffreste mit 1 bis 6 Kohlenstoffatomen, insbesondere um Wasserstoffatom, den Methyl-, Ethyl- oder Propylrest.

Beispiele für Rest R^{x} sind Wasserstoffatom oder die für den Rest R¹ angegebenen Reste.

Vorzugsweise handelt es sich bei Rest R^{x} um Wasserstoffatom oder einwertige, gegebenenfalls mit -CN oder -Halogen substituierte Kohlenwasserstoffreste, bevorzugt um Wasserstoffatom oder Alkylgruppen, besonders bevorzugt um Wasserstoffatom oder lineare Alkylgruppen mit 1 bis 6 Kohlenstoffatomen, insbesondere um Wasserstoffatom, den Methyl- oder Ethylrest, ganz besonders bevorzugt um Wasserstoffatom.

Beispiele für Rest Y sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Cycloalkylenreste, wie Cyclopentylen-, Cyclohexylen-, Cycloheptylenreste und Methylcyclohexylenreste. Weitere Besipiele für den Rest Y sind Heteroalkylenreste wie z.B. durch Stickstoff unterbrochene Heteroalkylenreste wie der Ethylaminopropyl-Rest.

Bei Rest Y handelt es sich vorzugsweise um gegebenenfalls mit Halogenatomen, bevorzugt mit Fluor oder Chlor, substituierte Alkylenrest oder Heteroalkylenreste, bevorzugt um Alkylenreste mit 1 bis 6 Kohlenstoffatomen, besonders bevorzugt um Methylen-, Propylen- oder Butylenreste, insbesondere um den n-Propylenrest.

Die erfindungsgemäß hergestellten Oxamidoester-Gruppen aufweisenden Siloxane können entweder in linearer Form, in cyclischer Form oder in verzweigter bzw. vernetzter Form vorliegen.

Beispiele für erfindungsgemäß eingesetzte Verbindungen (A) der Formel (II) sind solche mit R¹ = -CH₃; R² = -CH₃; R³ = -CH₂CH₃, R^{x} = -H; Y = -(CH₂)₃ -; s=2, R¹ = -CH₃; R² = -CH₂CH₃; R³ = -CH₂CH₃; R^{x} = -H; Y = -(CH₂)₃ -; s=2, R¹ = -CH₃; R² = -CH₂CH₃; R³ = -CH₃; R^{x} = -H; Y = -(CH₂)₃ -; s=2, R¹ = -CH₃; R² = -CH₃; R³ = -CH₂CH₃; R^{x} = -H; Y = - (CH₂)₃ -; s=1, R¹ = -CH₃; R² = -CH₂CH₃; R³ = -CH₂CH₃; R^{x} = -H; Y = -(CH₂)₃ -; s=1, R¹ = -CH₃; R² = -CH₂CH₃; R³ = -CH₃; R^{x} = -H; Y = - (CH₂)₃ - s=1, R¹ = -CH₃; R³ = -CH₂CH₃; R^{x} = -H; Y = -(CH₂)₃ -; s=3, R¹ = -CH₃; R³ = -CH₃; R^{x} = -H; Y = - (CH₂)₃ - ; s=3, R¹ = -CH₃; R² = -CH₃; R³ = -CH₂CH₃; R^{x} = -H; Y = -(CH₂)-; s=2, R¹ = -CH₃; R² = -CH₂CH₃; R³ = -CH₂CH₃; R^{x} = -H; Y = -(CH₂)-; s=2, R¹ = -CH₃; R² = -CH₂CH₃; R³ = -CH₃; R^{x} = -H; Y = -(CH₂)-; s=2, R¹ = -C₆H₅; R² = -CH₃; R³ = -CH₂CH₃; R^{x} = -H; Y = -(CH₂)-; s=2, R¹ = -C₆H₅; R² = -CH₂CH₃; R³ = -CH₂CH₃; R^{x} = -H; Y = -(CH₂)-; s=2 und R¹ = -C₆H₅; R² = -CH₂CH₃; R³ = -CH₃; R^{x} = -H; Y = - (CH₂)-; s=2.

Bevorzugt handelt es sich bei den erfindungsgemäß eingesetzten Verbindungen der Formel (II) um aliphatische, mono- oder dialkoxy-basierte oxamidoesterfunktionelle Silane.

Bevorzugt handelt es sich bei den erfindungsgemäß eingesetzten Verbindungen der Formel (II) um farblose, luftstabile Verbindungen, welche bei Abwesenheit von Wasser stabil sind, besonders bevorzugt um farblose Verbindungen.

Bei den Verbindungen der Formel (II) handelt es sich um handelsübliche Produkte bzw. können sie nach in der Siliciumchemie gängigen Methoden hergestellt werden.

Beispiele für erfindungsgemäß eingesetzte Verbindungen der Formel (III) sind Dimethoxydimethylsilan, Diethoxydimethylsilan, Dihydroxydimethylsilan, Hydroxytrimethoxysilan, Methoxytrimethylsilan, Dimethoxydiphenylsilan, Dimethoxymethylphenylsilan, Dihydroxydiphenylsilan, Dihydroxymethylphenylsilan, Vinyltrimethoxysilan, Methyltrimethoxysilan, Tetramethoxysilan oder Tetraethoxysilan.

Bevorzugt handelt es sich bei den erfindungsgemäß eingesetzten Verbindungen der Formel (III) um Dimethoxydimethylsilan, Hydroxytrimethylsilan oder Methoxytrimethylsilan, wobei Dimethoxydimethylsilan und Hydroxytrimethylsilan besonders bevorzugt sind.

Bei den Verbindungen der Formel (III) handelt es sich um handelsübliche Produkte bzw. können sie nach in der Siliciumchemie gängigen Methoden hergestellt werden.

Falls Silane der Formel (III) eingesetzt werden, kann bei dem erfindungsgemäßen Verfahren das Gewichtsverhältnis zwischen den Silanen (III) und den Silanen der Formel (II) in weiten Bereichen variieren und wird in erster Linie durch das gewünschte Molekulargewicht der Verbindungen, die nach dem erfindungsgemäßen Verfahren hergestellt werden sollen, bestimmt.

Falls bei dem erfindungsgemäßen Verfahren Silane der Formel (III) eingesetzt werden, handelt es sich um Mengen von bevorzugt 10 bis 1000 Gewichtsteilen, besonders bevorzugt 30 bis 300 Gewichtsteilen, jeweils bezogen auf 100 Gewichtsteile der Komponente (II), eingesetzt. Bei dem erfindungsgemäßen Verfahren werden bevorzugt Silane der Formel (III) eingesetzt.

Beispiele für Komponente (W) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Bei dem erfindungsgemäßen Verfahren wird Wasser (W) in Mengen von bevorzugt 0,4 bis 10 fachem molaren Überschuss, besonders bevorzugt 0,8 bis 3 fachem molaren Überschuss, eingesetzt, jeweils bezogen auf die Gesamtzahl der reaktiven Gruppen -OR² und -OR⁵ in den eingesetzten Silanen (A) und gegebenenfalls (B), wobei R² und R⁵ eine der obengenannten Bedeutungen haben.

Zusätzlich zu den Komponenten (A), gegebenenfalls (B) und (W) können bei dem erfindungsgemäßen Verfahren weitere Komponenten eingesetzt werden, wie z.B. Katalysatoren (C) und organische Lösungsmittel (D).

Als gegebenenfalls eingesetzte Katalysatoren (C) können die gleichen Katalysatoren eingesetzt werden, die in bisher beschriebenen Equilibrierverfahren oder Kondensationsverfahreneingesetzt werden konnten, wie etwa starke Säuren oder starke Basen. Die verwendeten Katalysatoren (C) können bei den Verfahrensbedingungen in fester Form vorliegen oder auch in flüssiger Form.

Bevorzugt handelt es sich bei den gegebenenfalls eingesetzten Katalysatoren (C) um starke Säuren, wie HCl, Schwefelsäure, Sulfonsäuren oder auch Phosphornitrilchloride (PNC12) oder deren oligomere bzw. polymeren Analoga, oder auch um starke Basen, wie NaOH, KOH, CsOH, RbOH, Ammoniumhydroxide oder Metallalkoholate.

Falls Katalysatoren (C) eingesetzt werden, handelt es sich um Mengen von bevorzugt 10 bis 10 000 Gewichts-ppm, besonders bevorzugt von 10 bis 2000 Gewichts-ppm, jeweils bezogen auf die Gesamtmenge der Komponenten (A) und (B). Bei dem erfindungsgemäßen Verfahren werden bevorzugt keine Katalysatoren (C) eingesetzt.

Das erfindungsgemäße Verfahren kann in Anwesenheit oder in Abwesenheit von Lösungsmitteln (D) durchgeführt werden. Falls Lösungsmittel (D) eingesetzt werden, handelt es sich bevorzugt um Lösungsmittel oder Lösungsmittelgemische mit einem Siedebereich von 80 bis 160° C bei 0,1 MPa. Die Bezeichnung Lösungsmittel bedeutet nicht, dass sich alle Reaktionskomponenten in diesem lösen müssen. Die Anwesenheit von Lösungsmittel (D) kann u.a. dazu dienen, die Viskosität der gewünschten Endprodukte so herabzusetzten, dass diese leichter mit technischen Mittel gefördert oder gepumpt werden können.

Bevorzugte Beispiele für gegebenenfalls eingesetzte aprotische Lösungsmittel (D) sind aliphatische Kohlenwasserstoffe, wie z.B. Hexan, Heptan oder Decan, aromatische Kohlenwasserstoffe, wie z.B. Toluol oder Xylol, sowie Ether, wie Tetrahydrofuran (THF), Diethylether und Methyl-tert-butylether (MTBE), Ketone wie z.B. Aceton oder 2-Butanon oder Alkohole wie Ethanol oder Methanol.

Falls bei dem erfindungsgemäßen Verfahren Lösungsmittel (D) eingesetzt werden, sollte bevorzugt die Menge ausreichen, um eine ausreichende Homogenisierung der Reaktionsmischung zu gewährleisten.

Falls bei dem erfindungsgemäßen Verfahren Lösungsmittel (D) eingesetzt werden, handelt es sich um Mengen von bevorzugt 20 bis 80 Gew.-%, besonders bevorzugt 20 bis 50 Gew.-%, jeweils bezogen auf das Gesamtgewicht aller eingesetzten Komponenten. Bei dem erfindungsgemäßen Verfahren werden bevorzugt keine Lösungsmittel (D) eingesetzt.

Bei dem erfindungsgemäßen Verfahren beträgt der Anteil der Komponenten (A) bis (D) an der Gesamtmenge an eingesetzten Stoffen bevorzugt mindestens 90 Gew.-%, besonders bevorzugt mindestens 95 Gew.-%.

Bei dem erfindungsgemäßen Verfahren werden außer den Komponenten (A) bis (D) sowie gegebenenfalls deren herstellungsbedingten Verunreinigungen bevorzugt keine weiteren Bestandteile eingesetzt.

Bei dem erfindungsgemäßen Verfahren können die eingesetzten Edukte in beliebiger und bisher bekannter Weise miteinander vermischt werden. Die Reihenfolge beim Vermischen der Bestandteile (A), gegebenenfalls (B), gegebenenfalls (C) und gegebenenfalls (D) sowie Wasser (W) ist zwar nicht entscheidend, für die Praxis hat es sich jedoch bewährt, falls Katalysator (C) eingesetzt wird, diesen bevorzugt dem Gemisch der anderen Bestandteile zuletzt zuzusetzen. Dabei kann der Katalysator (C) auch als Vormischung in einem Lösungsmittel (D) oder in einer der Komponente (A) oder (B), bevorzugt in der Komponente (B), falls diese eingesetzt wird, zugesetzt werden, insbesondere um die korrekte Dosierung des Katalysators (C) zu erleichtern.

Nach erfolgter Umsetzung wird die so erhaltene Produktmischung auf an sich bekannte Weise aufgearbeitet. Die Entfernung nichtumgesetzter Edukte, wie z.B. Wasser, oder gegebenenfalls entstehender Kondensationsprodukte, wie z.B. Alkohole, oder Nebenprodukte, wie z.B. cyclische, nichtfunktionelle Siloxane, erfolgt bevorzugt bei erhöhter Temperatur und/oder vermindertem Druck. Des Weiteren können bei Beendigung der erfindungsgemäßen Umsetzung die gegebenenfalls eingesetzten Katalysatoren (C) abhängig von der Art, Einsatzmenge oder Verwendungszweck des Endproduktes wahlweise in neutralisierter Form oder auch in nichtneutralisierter Form im Endprodukt verbleiben oder können durch bekannte Methoden, wie z.B. durch Filtration oder durch Adsporption auf basische Oxide wie Aluminiumoxid, Magnesiumoxid oder basische Salze wie z.B. Carbonate oder Hydrogencarbonate neutralisiert und gegebenenfalls abfiltriert werden.

Bevorzugt sind die in der erfindungsgemäß erhaltenen Produktmischung gegebenenfalls verbleibenden Mengen an cyclischen, nichtfunktionellen Siloxanprodukten unter 1 Gew.-%, besonders bevorzugt unter 0,5 Gew.-%, ganz besonders bevorzugt unter 0,1 Gew.-%. Die Entfernung insbesondere der niedermolekularen cyclischen Siloxane der allgemeinen Formel

[R⁴₂Si-O]ₙ (IV)

mit n=3 bis 5 kann nach den im Stand der Technik bekannten Temperaturen und Drücken durch eine nachgeschaltete kontinuierliche oder diskontinuierliche Vakuumdestillation erfolgen

In einer bevorzugten Ausführungsform des erfindungsgemäßen Verfahrens werden (A) Silane der Formel (II) mit R¹ gleich Methylrest, R^{x} gleich Wasserstoffatom, Y gleich -C₃H₆-, s gleich 1 oder 2 und R² gleich Methyl- oder Ethylrest und R³ gleich Ethylrest mit (B) Silanen der Formel (III) mit R⁴ gleich Methylrest und R⁵ gleich Methyl- oder Ethylrest und t gleich 2 oder 3 in Abwesenheit von Katalysator (C) umgesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren wird dabei bevorzugt unter Schutzgas, wie z.B. Stickstoff oder Argon, besonders bevorzugt unter Stickstoff, durchgeführt.

Die Wahl eines geeigneten Reaktors zur Durchführung des erfindungsgemäßen Verfahrens wird dabei im Wesentlichen von der Viskosität der verwendeten Edukte und der Viskosität des erwarteten Produktes bestimmt. Es können hierbei neben klassischen Rührkesseln auch bei hochmolekularen Produkten u.a. Kneter zur Durchführung des Verfahrens Verwendung finden.

Das erfindungsgemäße Verfahren wird bei Temperaturen bevorzugt zwischen 0 und 250 °C durchgeführt, besonders bevorzugt zwischen 20 und 150 °C, ganz besonders bevorzugt zwischen 20 und 90 °C. Das erfindungsgemäße Verfahren wird dabei bevorzugt bei Drücken zwischen 10 hPa und 2000 hPa, besonders bevorzugt jedoch bei Drücken zwischen 100 hPa und 1100 hPa, insbesondere beim Druck der umgebenden Atmosphäre, also bei 900 bis 1100 hPa, durchgeführt

Das erfindungsgemäße Verfahren kann diskontinuierlich, halbkontinuierlich oder vollkontinuierlich durchgeführt werden, bevorzugt diskontinuierlich.

Nach dem erfindungsgemäßen Verfahren werden Siloxane enthaltend Einheiten der Formel

XₐR_{b}(R⁶O) _{c}SiO_{4-a-b-c/2} (I)

erhalten, wobei
R gleich oder verschieden sein kann und eine oben für Rest R¹ angegebene Bedeutung hat,
R⁶ gleich oder verschieden sein kann und eine oben für Rest R² angegebene Bedeutung hat,
X einen Rest 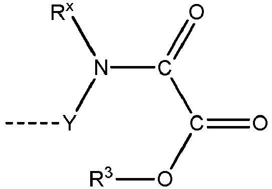
   darstellt mit R^{x}, Y und R³ gleich einer der obengenannten Bedeutungen,
   a 0 oder 1 ist,
   b 0, 1, 2 oder 3 ist und
   c 0, 1, 2 oder 3 ist,
   mit der Maßgabe, dass die Summe a+b+c kleiner oder gleich 3 ist und pro Molekül mindestens ein Rest X anwesend ist.

Ein weiterer Gegenstand sind Siloxane enthaltend Einheiten der Formel

XₐR_{b} (R⁶O) _{c}SiO_{4-a-b-c/2} (I),

wobei
R gleich oder verschieden sein kann und eine oben für Rest R¹ angegebene Bedeutung hat,
R⁶ gleich oder verschieden sein kann und eine oben für Rest R² angegebene Bedeutung hat,
X einen Rest 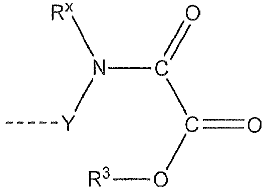
   darstellt mit R^{x}, Y und R³ gleich einer der obengenannten Bedeutungen,
   a 0 oder 1 ist,
   b 0, 1, 2 oder 3 ist und
   c 0, 1, 2 oder 3 ist,
   mit der Maßgabe, dass die Summe a+b+c kleiner oder gleich 3 ist und pro Molekül mindestens eine Einheit der Formel (I) anwesend ist mit a gleich 1 und der Summe b+c gleich 0 oder 1.

Bevorzugt enthalten die erfindungsgemäßen bzw. erfindungsgemäß hergestellten Siloxane von 2 bis 1000 Si-Atome, besonders bevorzugt von 2 bis 100 Si-Atome und ganz besonders bevorzugt von 2 bis 50 Siliziumatome. Die Siloxane der Verbindung (I) sind bevorzugt cyclisch oder linear, ganz besonder bevorzugt jedoch linear.

Bevorzugt bestehen die erfindungsgemäßen bzw. erfindungsgemäß hergestellten Siloxane aus Einheiten der Formel (I).

Bevorzugt ist in mindestens 50% der Einheiten der Formel (I) in den erfindungsgemäßen bzw. erfindungsgemäß hergestellten Siloxanen die Summe a+b+c gleich 2.

Beispiele für erfindungsgemäß hergestellte Verbindungen der allgemeinen Formel (I) sind

Et-O-CO-CO-NH-C₃H₆-SiMe₂-[OSiMe₂]₁₀-O-SiMe₂-C₃H₆-NH-CO-CO-O-Et, Me-O-CO-CO-NH-C₃H₆-SiMe₂-[OSiMe₂]₁₀-O-SiMe₂-C₃H₆-NH-CO-CO-O-Et, Me-O-CO-CO-NH-C₃H₆-SiMe₂-[OSiMe₂]₁₀-O-SiMe₂-C₃H₆-NH-CO-CO-O-Me, Et-O-CO-CO-NH-C₃H₆-SiMe₂-[OSiMe₂]₄-O-SiMe₂-C₃H₆-NH-CO-CO-O-Et, Me-O-CO-CO-NH-C₃H₆-SiMe₂-[OSiMe₂]₄-O-SiMe₂-C₃H₆-NH-CO-CO-O-Et, Me-O-CO-CO-NH-C₃H₆-SiMe₂-[OSiMe₂]₄-O-SiMe₂-C₃H₆-NH-CO-CO-O-Me, Et-O-CO-CO-NH-C₃H₆-SiMe₂-[OSiMe₂]₂-O-SiMe₂-C₃H₆-NH-CO-CO-O-Et, Me-O-CO-CO-NH-C₃H₆-SiMe₂-[OSiMe₂]₂-O-SiMe₂-C₃H₆-NH-CO-CO-O-Et, Me-O-CO-CO-NH-C₃H₆-SiMe₂-[OSiMe₂]₂-O-SiMe₂-C₃H₆-NH-CO-CO-O-Me, Et-O-CO-CO-NH-C₃H₆-SiMe₂-O-SiMe₂-C₃H₆-NH-CO-CO-O-Et, Me-O-CO-CO-NH-C₃H₆-SiMe₂-O-SiMe₂-C₃H₆-NH-CO-CO-O-Et, Me-O-CO-CO-NH-C₃H₆-SiMe₂-O-SiMe₂-C₃H₆-NH-CO-CO-O-Me, Et-O-CO-CO-NH-C₂H₄-NH-C₃H₆-SiMe₂-[OSiMe₂]₂-O-SiMe₂-C₃H₆-NH-C₂H₄-NH -CO-CO-O-Et, Et-O-CO-CO-NH-C₂H₄-NH-C₃H₆-SiMe₂-[OSiMe₂]₄-O-SiMe₂-C₃H₆-NH-C₂H₄-NH -CO-CO-O-Et, Et-O-CO-CO-NH-C₃H₆-SiMe₂-[OSiMe₂]₁₀-[OSiMe-C₃H_{g}-NH-CO-CO-O-Et]₁-O-SiMe₂-C₃H₆-NH-CO-CO-O-Et, Et-O-CO-CO-NH-C₃H₆-SiMe₂-[OSiMe₂]₁₀-[OSiMe-C₃H₆-NH-CO-CO-O-Et]₂-O-SiMe₂-C₃H₆-NH-CO-CO-O-Et, Et-O-CO-CO-NH-C₃H₆-SiMe₂-[OSiMe₂]₁₀-[OSiMe-C₃H₆-NH-CO-CO-O-Et]₃-O-SiMe₂-C₃H₆-NH-CO-CO-O-Et, Me-O-CO-CO-NH-C₃H₆-SiMe₂-[OSiMe₂]₁₀-LOSiMe-C₃H₆-NH-CO-CO-O-Et]₁-O-SiMe₂-C₃H₆-NH-CO-CO-O-Me, Me-O-CO-CO-NH-C₃H₆-SiMe₂-[OSiMe₂]₁₀-[OSiMe-C₃H₆-NH-CO-CO-O-Et]₂-O-SiMe₂-C₃H₆-NH-CO-CO-O-Me, Me-O-CO-CO-NH-C₃H₆-SiMe₂-[OSiMe₂]₁₀-[OSiMe-C₃H₆-NH-CO-CO-O-Et]₃-O-SiMe₂-C₃H₆-NH-CO-CO-O-Me, Me₃Si-[OSiMe₂]₁₀-[OSiMe-C₃H₆-NH-CO-CO-O-Et]₁-O-SiMe₂-C₃H₆-NH-CO-CO-O-Et, Me₃Si-[OSiMe₂]₁₀-[OSiMe-C₃H₆-NH-CO-CO-O-Et]₂-O-SiMe₂-C₃H₆-NH-CO-CO-O-Et, Me₃Si-[OSiMe₂]₁₀-[OSiMe-C₃H₆-NH-CO-CO-O-Et]₃-O-SiMe₂-C₃H₆-NH-CO-CO-O-Et, Me₃Si-[OSiMe₂]₁₀-[OSiMe-C₃H₆-NH-C₂H₄-NH-CO-CO-O-Et]₁-O-SiMe₂-C₃H₆-NH-CO-CO-O-Et, Me₃Si-[OSiMe₂]₁₀-[OSiMe-C₃H₆-NH-C₂H₄-NH-CO-CO-O-Et]₂-O-SiMe₂-C₃H₆-NH-CO-CO-O-Et, Me₃Si-[OSiMe₂]₁₀-[OSiMe-C₃H₆-NH-C₂H₄-NH-CO-CO-O-Et]₃-O-SiMe₂-C₃H₆-NH-CO-CO-O-Et, Me₃Si-[OSiMe₂]₁₀-[OSiMe-C₃H₆-NH-CO-CO-O-Et]₁-O-SiMe₃, Me₃Si-[OSiMe₂]₁₀-[OSiMe-C₃H₆-NH-CO-CO-O-Et]₂-O-SiMe₃, Me₃Si-[OSiMe₂]₁₀-[OSiMe-C₃H₆-NH-CO-CO-O-Et]₃-O-SiMe₃, Me₃Si-[OSiMe₂]₁₀-[OSiMe-C₃H₆-NH-C₂H₄-NH-CO-CO-O-Et]₁-O-SiMe₃, Me₃Si-[OSiMe₂]₁₀-[OSiMe-C₃H₆-NH-C₂H₄-NH-CO-CO-O-Et]₂-O-SiMe₃, Me₃Si-[OSiMe₂]₁₀-[OSiMe-C₃H₆-NH-C₂H₄-NH-CO-CO-O-Et]₃-O-SiMe₃, Me₃Si-[OSiMe₂]₁₀-[OSiMe-C₃H₆-NH-CO-CO-O-Me]₁-O-SiMe₃, Me₃Si-[OSiMe₂]₁₀-[OSiMe-C₃H₆-NH-CO-CO-O-Me]₂-O-SiMe₃ und Me₃Si-[OSiMe₂]₁₀-[OSiMe-C₃H₆-NH-CO-CO-O-Me]₃-O-SiMe₃, wobei Me Methyl- und Et Ethylrest bedeutet.

Die erfindungsgemäß hergestellten Siloxane haben eine Farbzahl APHA von bevorzugt 0 bis 100, besonders bevorzugt von 0 bis 20, ganz besonders bevorzugt von 0 bis 10.

Im Rahmen der vorliegenden Erfindung erfolgt die Bestimmung der APHA Zahl gemäß DIN ISO 6271-2 bevorzugt mittels eines LICO 500-Gerätes der Fa. Hach-Lange. Dabei fließt in den APHA-Messwert nicht nur die Farbe ein, sondern zusätzlich auch der Trübungswert des gemessenen Produktes.

Die erfindungsgemäß hergestellten Siloxane haben ein durchschnittliches Molekulargewicht Mn (Zahlenmittel) von bevorzugt 263 g/mol bis 10 000 g/mol, besonders bevorzugt von 420 g/mol bis 5 000 g/mol und ganz besonders bevorzugt von 448 bis 4 000 g/mol.

Das zahlenmittlere Molekulargewicht Mn wird dabei im Rahmen der vorliegenden Erfindung mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Alternativ kann das zahlenmittlere Molekulargewicht Mn auch durch die Auswertung eines 1H bzw. 29Si NMR Spektrums durch die integrale Bestimmung der Endgruppen und der weiteren funktionellen Gruppen ermittelt werden.

Das durchschnittliche Molekulargewicht (Zahlenmittel) des Endproduktes wird dabei hauptsächlich durch das jeweilige Verhältnis der erfindungsgemäß verwendeten Edukte bestimmt.

Das erfindungsgemäße Verfahren hat den Vorteil, dass es einfach und schnell in der Durchführung ist, wobei einfache Ausgangsprodukte verwendet werden können.

Das erfindungsgemäße Verfahren hat den Vorteil, dass Oxamidester-Gruppen aufweisende Siloxane in hoher Reinheit erhalten werden, insbesondere ohne Trübung und ohne Gelbfärbung.

Das erfindungsgemäße Verfahren hat den weiterhin Vorteil, dass hier leicht zugängliche, günstige und leicht zu verarbeitende Edukte verwendet werden können.

Das erfindungsgemäße Verfahren hat den Vorteil, dass Oxamidoester-Gruppen aufweisende Siloxane mit einem hohen Funktionalisierungsgrad, der gezielt eingestellt werden kann, erhalten werden.

Das erfindungsgemäße Verfahren hat ebenso den Vorteil, dass Oxamidoester-Gruppen aufweisende Siloxane erhalten werden können, die die gewünschte Oxamidoester-Gruppe in der Seitenkette tragen.

Nach dem erfindungsgemäßen Verfahren werden funktionelle Siloxane erhalten, die z.B. zur Beschichtung von Fasern wie Wolle, Baumwolle oder Textilien verwendet werden können, oder zur Beschichtung von Lederwaren oder als Schmiermittel im Maschinenbau Verwendung finden können. Zusätzlich können die erfindungsgemäßen oder erfindungsgemäß hergestellten funktionellen Siloxane auch bei der Herstellung von Polymeren oder bei der Modifizierung von Polymeren Verwendung finden.

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25 °C. Sofern nicht anders angegeben, werden die nachstehenden Beispiele bei einem Druck der umgebenden Atmosphäre, also etwa 1010 hPa, und bei Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt.

Die nachfolgenden Beispiele werden in Anwesenheit von Stickstoff als Schutzgas durchgeführt.

Bei den in den Beispielen angegebenen Molekulargewichten handelt es sich um zahlengemittelte Molekulargewichte. Die Auswertung des Gehaltes an Nebenprodukten und durchschnittlichen Molekulargewichte erfolgt per NMR-Spektroskopie. Dabei werden per 29Si-NMR-Spektroskopie die mittlere Kettenlänge, die Rest-Si-OH Gehalte und gegebenenfalls Cyclengehalte sowie per 1H -NMR die Verhältnisse zwischen Oxamidoester-Gruppen und Alkylgruppen am Siloxangrundgerüst bestimmt.

Me bedeutet Methylrest.

Folgende Edukte werden verwendet:
Silan 1: Dimethoxydimethylsilan (120,22 g/mol)
Silan 2:
   Ethyl 2-((3-(diethoxy(methyl)silyl)propyl)amino)-2-oxoacetat EtO-CO-CO-HN-CH₂CH₂CH₂-Si-Me(EtO)₂ (291,42 g/mol)
Silan 3:
   Ethyl 2-((3-(methoxydimethylsilyl)propyl)amino)-2-oxoacetat EtO-CO-CO-HN-CH₂CH₂CH₂-Si-Me₂(MeO) (247,36 g/mol)
Silan 4:
   Ethyl 2-((3-(ethoxydimethylsilyl)propyl)amino)-2-oxoacetat EtO-CO-CO-HN-CH₂CH₂CH₂-Si-Me₂(EtO) (261,39 g/mol)
Silan 5: Trimethylsilanol (90,20 g/mol)

### Beispiel 1

Zu 43,6 g (176 mmol) des Silans 3 wurden in einem 250ml-3-Halsrundkolben mit Rührer, Innenthermometer und Rückflusskühler bei 22°C unter Rühren 6,4 g (353 mmol) Wasser zugegeben und auf 50°C erwärmt. Nach 5 Stunden wurde das überschüssige Wasser und der entstandene Alkohol durch Anlegen eines Druckes von 10 hPa mittels eines Rotationsverdampfers entfernt, worauf man 37,3 g eines Bisoxamidoesterpropyl-terminierten Disiloxans als klare, viskose Flüssigkeit (512 mPas) erhielt.

### Beispiele 2 bis 17

Analog der in Beispiel 1 beschriebenen Arbeitsweise wurden die verwendeten Silane 1 bis 5 nacheinander in den in Tabelle 1 angegebenen Mengen in einem 250 ml-3-Hals-Rundkolben mit Rührer, Innenthermometer und Rückflusskühler bei 22 °C unter Rühren miteinander vermischt. Anschließend wurden die entsprechenden Mengen Wasser innerhalb von 30 Minuten unter Rühren zugetropft und die entstandene Mischung auf 50 °C erwärmt. Nach 5 h wurde das überschüssige Wasser und der entstandene Alkohol durch Anlegen eines Druckes von 10 hPa mittels eines Rotationsverdampfers entfernt, worauf man Siloxane mit den in Tabelle 2 angegebenen Eigenschaften erhielt.

**Tabelle 1:**

| Beispiel | Silan 1 | | Silan 2 | | Silan 3 | | Silan 4 | | Silan 5 | | Wasser | |
|---|---|---|---|---|---|---|---|---|---|---|---|---|
| | [mmol] | [g] | [mmol] | [g] | [mmol] | [g] | [mmol] | [g] | [mmol] | [g] | [mmol] | [g] |
| 1 | 0 | 0,0 | 0 | 0,0 | 176 | 43,6 | 0 | 0,0 | 0 | 0,0 | 353 | 6,4 |
| 2 | 0 | 0,0 | 138 | 40,1 | 0 | 0,0 | 0 | 0,0 | 0 | 0,0 | 551 | 9,9 |
| 3 | 105 | 12,6 | 0 | 0,0 | 105 | 26,0 | 0 | 0,0 | 0 | 0,0 | 631 | 11,4 |
| 4 | 150 | 18,0 | 0 | 0,0 | 75 | 18,5 | 0 | 0,0 | 0 | 0,0 | 749 | 13,5 |
| 5 | 190 | 22,8 | 0 | 0,0 | 47 | 11,8 | 0 | 0,0 | 0 | 0,0 | 856 | 15,4 |
| 6 | 220 | 26,4 | 0 | 0,0 | 27 | 6,8 | 0 | 0,0 | 0 | 0,0 | 934 | 16,8 |
| 7 | 72 | 8,6 | 72 | 20,9 | 0 | 0,0 | 0 | 0,0 | 72 | 7,5 | 719 | 12,9 |
| 8 | 134 | 16,1 | 67 | 19,5 | 0 | 0,0 | 0 | 0,0 | 0 | 0,0 | 803 | 14,5 |
| 9 | 177 | 21,2 | 44 | 12,9 | 0 | 0,0 | 0 | 0,0 | 0 | 0,0 | 884 | 15,9 |
| 10 | 117 | 14,0 | 58 | 17,0 | 0 | 0,0 | 0 | 0,0 | 51 | 5,3 | 760 | 13,7 |
| 11 | 113 | 13,5 | 56 | 16,4 | 0 | 0,0 | 0 | 0,0 | 56 | 5,9 | 789 | 14,2 |
| 12 | 161 | 19,4 | 40 | 11,7 | 0 | 0,0 | 0 | 0,0 | 35 | 3,6 | 847 | 15,3 |
| 13 | 157 | 18,9 | 39 | 11,5 | 0 | 0,0 | 0 | 0,0 | 39 | 4,1 | 865 | 15,6 |
| 14 | 97 | 11,7 | 48 | 14,1 | 48 | 12,0 | 0 | 0,0 | 0 | 0,0 | 679 | 12,2 |
| 15 | 141 | 17,0 | 35 | 10,3 | 35 | 8,7 | 0 | 0,0 | 0 | 0,0 | 778 | 14,0 |
| 16 | 0 | 0,0 | 0 | 0,0 | 0 | 0,0 | 168 | 44,0 | 0 | 0,0 | 333 | 6,0 |
| 17 | 0 | 0,0 | 0 | 0,0 | 98 | 24,3 | 66 | 17,3 | 0 | 0,0 | 467 | 8,4 |

**Tabelle 2:**

| Beispiel | Molekulargewicht Mn [g/mol] | Oxamidester-Gruppen | Alkylgruppen pro O-xamidoester-Gruppe | Alkoxygruppen pro Oxamidoestergruppe | Viskosität [mPas] | Ausbeute [g] | Aussehen |
|---|---|---|---|---|---|---|---|
| 1 | n.b. | 1 | 2 | 0 | 512 | 37,3 | klare farblose Flüssigkeit |
| 2 | 903 | 1 | 1 | 0,08 | 507 | 28,3 | klare farblose Flüssigkeit |
| 3 | 735 | 1 | 3,8 | 0 | 8015 | 27,5 | klare farblose Flüssigkeit |
| 4 | 721 | 1 | 5,3 | 0 | | 23,4 | klare farblose Flüssigkeit |
| 5 | 753 | 1 | 8,1 | 0 | | 22,4 | klare farblose Flüssigkeit |
| 6 | 697 | 1 | 14,4 | 0 | | 18,8 | klare farblose Flüssigkeit |
| 7 | 853 | 1 | 2,6 | 0 | | 25,3 | klare farblose Flüssigkeit |
| 8 | 875 | 1 | 4,3 | 0 | | 22,6 | klare farblose Flüssigkeit |
| 9 | 853 | 1 | 7,3 | 0 | | 21 | klare farblose Flüssigkeit |
| 10 | 932 | 1 | 2,4 | 0,05 | | 23,8 | klare farblose Flüssigkeit |
| 11 | 886 | 1 | 3,5 | 0 | | 22,3 | klare farblose Flüssigkeit |
| 12 | 886 | 1 | 4,1 | 0,13 | | 21,5 | klare farblose Flüssigkeit |
| 13 | 918 | 1 | 5,9 | 0 | | 21,4 | klare farblose Flüssigkeit |
| 14 | 827 | 1 | 3,2 | 0,02 | | 26,5 | klare farblose Flüssigkeit |
| 15 | 766 | 1 | 5 | 0 | | 24,2 | klare farblose Flüssigkeit |
| 16 | n.b. | 1 | 2 | 0 | 508 | 36,2 | klare farblose Flüssigkeit |
| 17 | n.b. | 1 | 2 | 0 | 519 | 35,7 | klare farblose Flüssigkeit |

Bei den erfindungsgemäß erhaltenen Siloxanen handelt es sich um klare, farblose Kondensationsprodukte mit z.T. hohen Viskositäten, bedingt durch die Anwesenheit der Oxamidoester-Gruppe.

## Patentansprüche

1. Verfahren zur Herstellung von Oxamidoester-Gruppen aufweisenden Siloxanen durch Umsetzung von
(A) Silanen der allgemeinen Formel 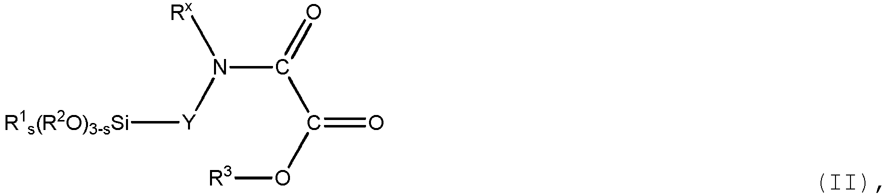 gegebenenfalls (B) Silanen der allgemeinen Formel
R⁴t(R⁵O)₄₋ₜSi (III)
und (W) Wasser,
wobei
**R¹** unabhängig voneinander gleich oder verschieden sein kann und einwertige, gegebenenfalls substituierte, SiC-gebundene Kohlenwasserstoffreste bedeutet, welche durch Heteroatome unterbrochen sein können,
**R²** unabhängig voneinander gleich oder verschieden sein kann und Wasserstoffatom oder einwertige gegebenenfalls substituierte Kohlenwasserstoffreste bedeutet, welche durch Heteroatome unterbrochen sein können,
**R³** einwertige, gegebenenfalls substituierte Kohlenwasserstoffreste bedeutet, die durch Sauerstoffatome unterbrochen sein können,
**R^{x}** Wasserstoffatom oder gegebenenfalls substituierte Kohlenwasserstoffreste bedeutet,
Y zweiwertige, gegebenenfalls substituierte Kohlenwasserstoffreste darstellt, die durch Sauerstoffatome oder Stickstoffatome unterbrochen sein können,
**R⁴** unabhängig voneinander gleich oder verschieden sein kann und einwertige, gegebenenfalls substituierte, SiC-gebundene Kohlenwasserstoffreste bedeutet, welche durch Heteroatome unterbrochen sein können,
**R⁵** unabhängig voneinander gleich oder verschieden sein kann und Wasserstoffatom oder einwertige, gegebenenfalls substituierte Kohlenwasserstoffreste bedeutet, welche durch Heteroatome unterbrochen sein können,
**s** 0, 1 oder 2 ist und
**t** 0, 1, 2 oder 3 ist.

2. Verfahren gemäß Anspruch 1, **dadurch gekennzeichnet, dass** (A) Silane der Formel (II) mit s gleich 1 ofder 2 eingesetzt werden.

3. Verfahren gemäß Anspruch 1 oder 2, **dadurch gekennzeichnet, dass** (B) Silane der Formel (III) eingesetzt werden.

4. Verfahren gemäß einem oder mehreren der Ansprüche 1 bis 3, **dadurch gekennzeichnet, dass** Wasser (W) in Mengen von 0,4 bis 10 fachem molaren Überschuss, bezogen auf die Gesamtzahl der reaktiven Gruppen -OR² und -OR⁵ in den eingesetzten Silanen (A) und gegebenennfalls (B), wobei R² und R⁵ eine der obengenannten Bedeutungen haben, eingesetzt wird.

5. Verfahren gemäß einem oder mehreren der Ansprüche 1 bis 4, **dadurch gekennzeichnet, dass** (A) Silane der Formel (II) mit R¹ gleich Methylrest, R^{x} gleich Wasserstoffatom, Y gleich -C₃H₆-, s gleich 1 oder 2 und R² gleich Methyl- oder Ethylrest und R³ gleich Ethylrest mit (B) Silanen der Formel (III) mit R⁴ gleich Methylrest und R⁵ gleich Methyl- oder Ethylrest und t gleich 2 oder 3 in Abwesenheit von Katalysator (C) umgesetzt werden.

6. Verfahren gemäß einem oder mehreren der Ansprüche 1 bis 5, **dadurch gekennzeichnet, dass** Siloxane mit 2 bis 1000 Si-Atome erhalten werden.

7. Siloxane enthaltend Einheiten der Formel
XₐR_{b} (R⁶O) _{c}SiO_{4-a-b-c/2} (I),
wobei
R gleich oder verschieden sein kann und eine oben für Rest R¹ angegebene Bedeutung hat,
R⁶ gleich oder verschieden sein kann und eine oben für Rest R² angegebene Bedeutung hat,
X einen Rest 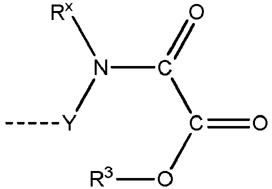
darstellt mit R^{x}, Y und R³ gleich einer der obengenannten Bedeutungen,
a 0 oder 1 ist,
b 0, 1, 2 oder 3 ist und
c 0, 1, 2 oder 3 ist,
mit der Maßgabe, dass die Summe a+b+c kleiner oder gleich 3 ist und pro Molekül mindestens eine Einheit der Formel (I) anwesend ist mit a gleich 1 und der Summe b+c gleich 0 oder 1.

8. Siloxane gemäß Anspruch 7, **dadurch gekennzeichnet, dass** sie aus Einheiten der Formel (I) bestehen.

9. Siloxane gemäß Anspruch 7 oder 8, **dadurch gekennzeichnet, dass** in mindestens 50% der Einheiten der Formel (I) die Summe a+b+c gleich 2 ist.

## Claims

1. Method for preparing siloxanes having oxamidoester groups by reacting
(A) silanes of the general formula 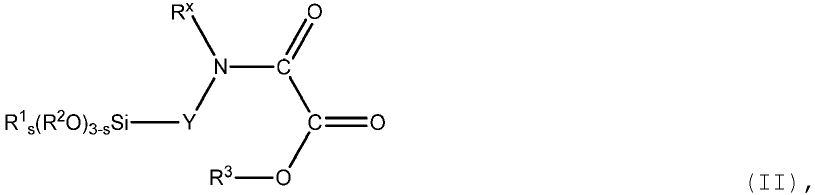 optionally (B) silanes of the general formula
R⁴t(R⁵O) ₄₋ₜSi (III)
and (W) water,
where
**R¹** may independently be identical or different and represents monovalent, optionally substituted, SiC-bonded hydrocarbon radicals that may be interrupted by heteroatoms,
**R²** may independently be identical or different and represents a hydrogen atom or monovalent, optionally substituted hydrocarbon radicals that may be interrupted by heteroatoms,
**R³** represents monovalent, optionally substituted hydrocarbon radicals that may be interrupted by oxygen atoms,
**R^{x}** represents a hydrogen atom or optionally substituted hydrocarbon radicals,
**Y** represents divalent, optionally substituted hydrocarbon radicals that may be interrupted by oxygen atoms or nitrogen atoms,
**R⁴** may independently be identical or different and represents monovalent, optionally substituted, SiC-bonded hydrocarbon radicals that may be interrupted by heteroatoms,
**R⁵** may independently be identical or different and represents a hydrogen atom or monovalent, optionally substituted hydrocarbon radicals that may be interrupted by heteroatoms,
**s** is 0, 1 or 2 and
**t** is 0, 1, 2 or 3.

2. Method according to Claim 1, **characterized in that** (A) silanes of the formula (II) where s is 1 or 2 are used.

3. Method according to Claim 1 or 2, **characterized in that** (B) silanes of the formula (III) are used.

4. Method according to one or more of Claims 1 to 3, **characterized in that** water (W) is used in amounts of 0.4 to 10 times molar excess based on the total number of reactive -OR² and -OR⁵ groups in the silanes (A) and optionally (B) used, where R² and R⁵ are as defined above.

5. Method according to one or more of Claims 1 to 4, **characterized in that** (A) silanes of the formula (II), where R¹ is a methyl radical, R^{x} is a hydrogen atom, Y is -C₃H₆-, s is 1 or 2, R² is a methyl or ethyl radical, and R³ is an ethyl radical, are reacted, in the absence of catalyst (C), with (B) silanes of the formula (III), where R⁴ is a methyl radical and R⁵ is a methyl or ethyl radical and t is 2 or 3.

6. Method according to one or more of Claims 1 to 5, **characterized in that** siloxanes having 2 to 1000 silicon atoms are obtained.

7. Siloxanes comprising units of the formula
XₐR_{b} (R⁶O) _{c}SiO_{4-a-b-c/2} (I),
where
R may be identical or different and is as defined above for radical R¹,
R⁶ may be identical or different and is as defined above for radical R²,
X represents a radical 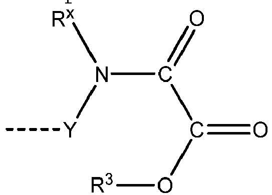
where R^{x}, Y, and R³ are as defined above,
a is 0 or 1,
b is 0, 1, 2 or 3, and
c is 0, 1, 2 or 3,
with the proviso that the sum a+b+c is less than or equal to 3 and each molecule contains at least one unit of the formula (I), where a is 1 and the sum b+c is 0 or 1.

8. Siloxanes according to Claim 7, **characterized in that** they consist of units of the formula (I).

9. Siloxanes according to Claim 7 or 8, **characterized in that** the sum a+b+c is 2 in at least 50% of the units of the formula (I).

## Revendications

1. Procédé pour la préparation de siloxanes présentant des groupes ester d'oxamide par transformation
(A) de silanes de formule générale 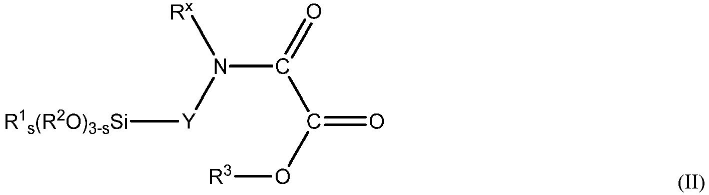 éventuellement (B) de silanes de formule générale
R⁴ₜ(R⁵O)₄₋ₜSi (III)
et (W) d'eau,
R¹ pouvant être indépendamment l'un de l'autre identiques ou différents et signifiant des radicaux monovalents hydrocarbonés liés par SiC, éventuellement substitués, qui peuvent être interrompus par des hétéroatomes,
R² pouvant être indépendamment l'un de l'autre identiques ou différents et signifiant un atome d'hydrogène ou des radicaux monovalents hydrocarbonés éventuellement substitués, qui peuvent être interrompus par des hétéroatomes,
R³ signifiant des radicaux monovalents hydrocarbonés, éventuellement substitués, qui peuvent être interrompus par des atomes d'oxygène, R^{x} signifiant un atome d'hydrogène ou des radicaux hydrocarbonés éventuellement substitués,
Y représentant des radicaux divalents hydrocarbonés éventuellement substitués, qui peuvent être interrompus par des atomes d'oxygène ou des atomes d'azote,
R⁴ pouvant être indépendamment l'un de l'autre identiques ou différents et signifiant des radicaux monovalents hydrocarbonés liés par SiC, éventuellement substitués, qui peuvent être interrompus par des hétéroatomes,
R⁵ pouvant être indépendamment l'un de l'autre identiques ou différents et signifiant un atome d'hydrogène ou des radicaux monovalents hydrocarbonés, éventuellement substitués, qui peuvent être interrompus par des hétéroatomes,
s étant 0, 1 ou 2 et
t étant 0, 1, 2 ou 3.

2. Procédé selon la revendication 1, **caractérisé en ce que** (A) des silanes de formule (II) avec s égal à 1 ou 2 sont utilisés.

3. Procédé selon la revendication 1 ou 2, **caractérisé en ce que** (B) des silanes de formule (III) sont utilisés.

4. Procédé selon l'une ou plusieurs des revendications 1 à 3, **caractérisé en ce que** de l'eau (W) est utilisée en des quantités d'excès molaire de 0,4 à 10, par rapport au nombre total de groupes réactifs -OR² et -OR⁵ dans les silanes (A) et éventuellement (B) utilisés, R² et R⁵ possédant l'une des significations mentionnées ci-dessus.

5. Procédé selon l'une ou plusieurs des revendications 1 à 4, **caractérisé en ce que** (A) des silanes de formule (II) avec R¹ égal à un radical méthyle, R^{x} égal à un atome d'hydrogène, Y égal à -C₃H₆-, s égal à 1 ou 2 et R² égal à un radical méthyle ou éthyle et R³ égal à un radical éthyle sont transformés avec (B) des silanes de formule (III) avec R⁴ égal à un radical méthyle et R⁵ égal à un radical méthyle ou éthyle et t égal à 2 ou 3 en l'absence de catalyseur (C) .

6. Procédé selon l'une ou plusieurs des revendications 1 à 5, **caractérisé en ce que** des siloxanes comportant 2 à 1 000 atomes de Si sont obtenus.

7. Siloxanes contenant des motifs de formule
XₐR_{b}(R⁶O)_{c}SiO_{4-a-b-c/2} (I),
R pouvant être identique ou différent et possédant une signification indiquée ci-dessus pour le radical R¹,
R⁶ pouvant être identique ou différent et possédant une signification indiquée ci-dessus pour le radical R2,
X représentant un radical 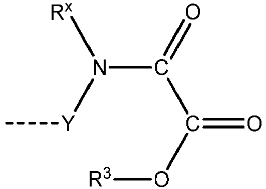
avec R^{x}, Y et R³ égaux à l'une des significations mentionnées ci-dessus,
a étant 0 ou 1,
b étant 0, 1, 2 ou 3 et
c étant 0, 1, 2 ou 3,
étant entendu que la somme a + b + c est inférieure ou égale à 3 et que par molécule, au moins un motif de formule (I) est présent avec a égal à 1 et la somme b + c égale à 0 ou 1.

8. Siloxanes selon la revendication 7, **caractérisés en ce qu'**ils sont constitués de motifs de formule (I).

9. Siloxanes selon la revendication 7 ou 8, **caractérisés en ce que** dans au moins 50 % des motifs de formule (I) la somme a + b + c est égale à 2.
